# EUROPÄISCHE PATENTANMELDUNG

(11) **EP 0 955 474 A2**
(43) Veröffentlichungstag der Anmeldung: **10.11.1999**
(21) Anmeldenummer: 99890148.2
(22) Anmeldetag: 06.05.1999
(51) Int. Cl.: F15B 21/04

(54) **Druckölsystem mit Ölfilter und damit ausgestattetes Getriebe**

(30) Priorität: 06.05.1998 AT 29298 U
(71) Anmelder: STEYR-DAIMLER-PUCH AKTIENGESELLSCHAFT, 1010 Wien (AT)
(72) Erfinder: Löw, Thomas, 3543 Krumau (AT)

(57) **Zusammenfassung**

Der Versorgungsteil eines Druckölsystemes enthält eine Ölpumpe (6), einen an deren Druckseite anschließenden Ölfilter (8) und ein Druckbegrenzungsventil (12,12'). Um den Versorgungsdruck möglichst genau über den gesamten Drehzahlbereich bzw. Fördermengenbereich und unabhängig von der Temperatur auf einem bestimmten Wert konstant zu halten, ist das Druckbegrenzungsventil (12,12') in einer zwischen der Ölpumpe (6) und dem Ölfilter (8) abzweigenden Rücklaufleitung (11,13) angeordnet und über eine Steuerleitung (14) mit einer Stelle stromabwärts des Ölfilters (8) verbunden.

## Beschreibung

Die Erfindung betrifft ein Druckölsystem, dessen Versorgungsteil eine Ölpumpe, einen an deren Druckseite anschließenden Ölfilter und ein Druckbegrenzungsventil enthält. Der Arbeitsteil des Druckölsystemes kann hydraulische Betätigungselemente eines Kraftfahrzeuges, Steuerzylinder - etwa für die Kupplungen eines Getriebes - oder Hydromotoren und zugeordnete Steuerventile umfassen. Diese Komponenten müssen mit einem bestimmten konstanten Druck gespeist werden, was bei variabler Pumpendrehzahl ein Druckbegrenzungsventil erfordert.

Bei bekannten gattungsgemäßen Druckölsystemen ist ein Druckbegrenzungsventil entweder stromabwärts oder stromaufwärts des Ölfilters angeordnet. Im ersten Fall hat das zur Folge, daß das gesamte von der Pumpe geförderte Drucköl unter Druckverlust durch den Ölfilter gepresst werden muß, was hohe Pumpleistung und entsprechende Dimensionierung von Leitungen und Ölfilter erfordert. Die dadurch verursachten Verluste sind vor allem in Verbindung mit einem Verbrennungsmotor beträchtlich, weil die Ölpumpe so ausgelegt sein muß, daß der bestimmte konstante Druck - der Versorgungsdruck - bereits bei Leerlauf des Verbrennungsmotors erreicht wird. Bei allen darüberliegenden Drehzahlen spricht das Druckbegrenzungsventil an und läßt einen Teil des Drucköles in einen Ölbehälter oder Sumpf abfließen. Dadurch ist sichergestellt, daß auch bei schwankendem Verbrauch des Systemes der Versorgungsdruck nicht unter den vorbestimmten Wert sinkt.

Im zweiten Fall (Druckbegrenzungsventil stromaufwärts des Ölfilters) wird nicht der tatsächlich zur Verfügung stehende Druck, sondern der Druck vor dem Ölfilter eingeregelt. Das Druckbegrenzungsventil darf somit nicht auf den Versorgungsdruck eingestellt sein, sondern auf einen Druck, der um die Druckverluste im Ölfilter höher ist. Wenn der Druckverlust im Ölfilter - etwa durch dessen Verschmutzung oder durch bei tiefer Temperatur höhere Viskosität des Öles steigt, so stimmt der eingestellte Druck nicht mehr. Der Rücklaufdruck ist eine weitere Störgröße, die den Versorgungsdruck des Systemes beeinflußt.

Der Erfindung liegt die Aufgabe zugrunde, den Versorgungsteil eines Druckölsystemes so zu gestalten, daß bei einem Minimum an Aufwand und Verlusten der Versorgungsdruck möglichst genau und reproduzierbar über den gesamten Drehzahlbereich bzw Fördermengenbereich und unabhängig von der Temperatur auf einem bestimmten Wert konstant gehalten wird.

Erfindungsgemäß wird das dadurch erreicht, daß das Druckbegrenzungsventil in einer zwischen der Ölpumpe und dem Ölfilter abzweigenden Rücklaufleitung angeordnet ist und über eine Steuerleitung mit einer Stelle stromabwärts des Ölfilters verbunden ist.

Die Steuerleitung führt den stromabwärts des Ölfilters tatsächlich herrschenden Druck, sodaß das Druckbegrenzungsventil durch Abfuhr des überflüssigen Öles stromaufwärts des Ölfilters den Versorgungsdruck stromabwärts des Ölfilters regelt. Da die Öltemperatur sich vor allem auf den Druckverlust im Ölfilter auswirkt, ist so auch dieser Einfluß auf den Versorgungsdruck ausgeglichen. Weil das überflüssige Öl nicht durch den Ölfilter gepresst werden muß, ist die Leistungsaufnahme der Pumpe kleiner, ist der Druckabfall im Ölfilter kleiner und die Leitungen können kleiner dimensioniert werden. Die notwendige Erhöhung des Pumpendruckes ist ja vom Filterdifferenzdruck abhängig.

Durch die erfindungsgemäße Anordnung wird aber noch ein weiterer Vorteil erreicht: Da der Rücklaufdruck keinen Einfluß auf den Ventilöffnungsdruck ausübt, können auch die Querschnitte der Rücklaufleitung kleiner gehalten werden, und es kann sogar die Rücklaufmenge noch in einem weiteren Ölkreislauf tieferen Druckniveaus - etwa in einem Schmierkreislauf - verwendet werden, ohne den Systemdruck nachteilig zu beeinflussen.

In einer vorteilhaften Ausführung ist das Druckbegrenzungsventil ein Schieberventil mit zwei in Schieberlängsrichtung versetzten in den Rücklauf eingebundenen Kanälen, dessen Kolbenschieber einen Ringraum bildet, der auf beiden Seiten durch gleich große Flächen begrenzt ist, und auf dessen Kolbenschieber in einer Richtung der Druck in der Steuerleitung und in der entgegengesetzten Richtung die Kraft einer Feder wirkt, sodaß der Kolbenschieber die Strömung durch den Ringraum freigibt, wenn der Druck in der Steuerleitung einen eingestellten Wert erreicht (Anspruch 2). Dieser eingestellte Wert ist der Versorgungsdruck. Durch Lage und Ausbildung des Ringraumes entsteht mit sehr geringem Aufwand ein druckausgeglichenes Ventil geringen Strömungswiderstandes.

In Weiterbildung der Erfindung wird der Druck in der Steuerleitung über eine Drosselstelle zusätzlich in eine Kammer geleitet, in der er auch im Sinne der Feder auf den Kolbenschieber wirkt und an die Kammer ist ein Vorsteuerventil angeschlossen, das sich öffnet, wenn der Druck in der Kammer einen eingestellten Wert erreicht (Anspruch 3). Auf diese Weise entsteht ein vorgesteuertes Ventil. Das hat den Vorteil, daß für die Beaufschlagung des Steuerkolbens eine schwächere Feder genügt, sodaß bei sehr großer abgeleiteter Menge die Abweichung des Versorgungsdruckes vom eingestellten Wert kleiner ist.

Wenn der Drosselkanal im Inneren des Kolbenschiebers ausgebildet ist und die Kammer die auf den Kolbenschieber wirkende Feder enthält (Anspruch 4), so erhält man eine besonders einfache Bauweise des vorgesteuerten Ventiles. Sie erlaubt es, ein direktgesteuertes Ventil nur durch Austausch des Kolbenschiebers in ein vorgesteuertes umzubauen.

Mit besonderem Vorteil wird ein erfindungsgemäßes Druckölsystem in einem Kraftfahrzeuggetriebe angewendet, in dem es dessen Schaltaktuatoren betätigt (Anspruch 5). Die Erfindung handelt somit auch von einem Getriebe, dessen hydraulische Aktuatoren Kupplungen oder andere Schaltelemente, ja sogar die steuerbare Hydromotor-Pumpe-Einheit eines hydrostatisch-mechanischen Leistungsverzweigungsgetriebes betätigen. Bei solchen Getrieben ist es wichtig, bereits ab einer sehr niederen Drehzahl über den vollen Versorgungsdruck zu verfügen und diesen auch während des Betriebes möglichst konstant zu halten.

Im Folgenden wird die Erfindung anhand von Abbildungen beschrieben und erläutert. Es stellen dar:
- Fig. 1:: Ein Schema eines erfindungsgemäßen Druckölsystemes,
- Fig.2:: Das Ventil der Fig. 1 vergrößert im Längsschnitt,
- Fig.3:: Eine Abwandlung des Schemas der Fig. 1,
- Fig.4:: Das Ventil der Fig.3 vergrößert im Längsschnitt.

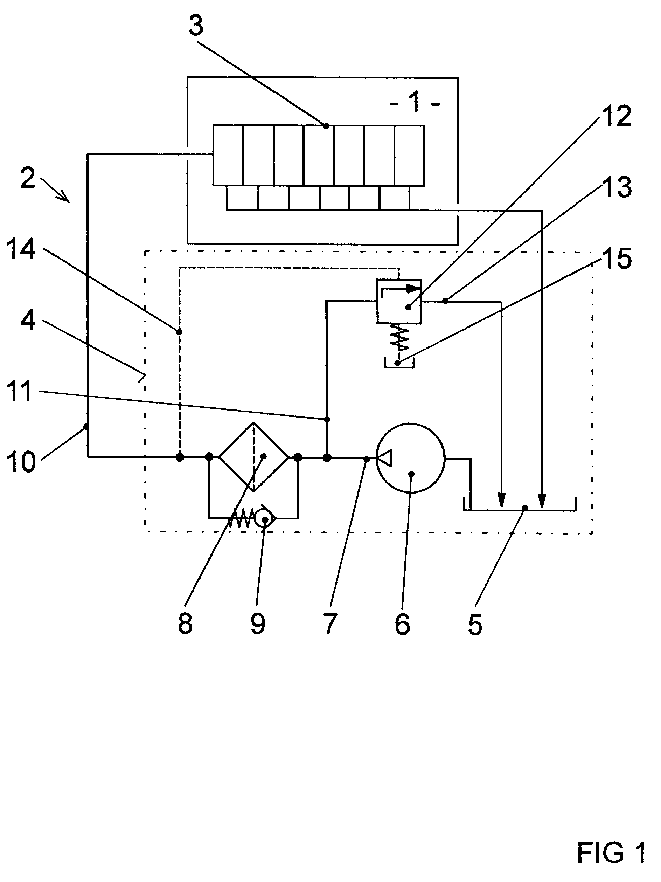

In Fig. 1 ist das Getriebe nur angedeutet und mit 1 bezeichnet, das zugehörige Druckölsystem mit 2. Die Verbraucher 3 des Druckölsystemes sind Betätigungselemente mit zugehörigen Ventilen, mittels derer das Getriebe geschaltet bzw. verstellt wird. Der Versorgungsteil 4 des Druckölsystemes ist strichpunktiert eingegrenzt. Eine Ölpumpe 6 ist vom Getriebe 1 aus angetrieben und saugt Öl aus einem Sumpf 5 oder aus einem getrennten Ölbehälter und pumpt es in die Verbindungsleitung 7 zu einem Ölfilter 8, vorzugsweise ein Feinfilter oder Hochdruckfilter, mit dem üblichen Sicherheitsventil 9 im Nebenschluß. Von der Druckseite des Ölfilters 8 führt eine Druckleitung 10 zu den Verbrauchern 3.

Stromaufwärts der Olpumpe 6, zwischen dieser und dem Ölfilter 8, zweigt eine Rücklaufleitung 11 ab und führt über ein Druckbegrenzungsventil 12 (hier nur schematisch angedeutet) einer Abflußleitung 13 in den Sumpf 5 bzw. Ölbehälter. Stromabwärts des Ölfilters 8, in der Druckleitung 10, zweigt eine Steuerleitung 14 ab und führt zum Druckbegrenzungsventil 12. Diese Steuerleitung 14 führt den tatsächlich stromabwärts des Ölfilters 8 herrschenden Druck dem Druckbegrenzungsventil 12 zu. Weiters ist noch eine Verbindung 15 mit dem Inneren des Getriebes oder Ölbehälters vorgesehen, die unter Atmosphärendruck steht.

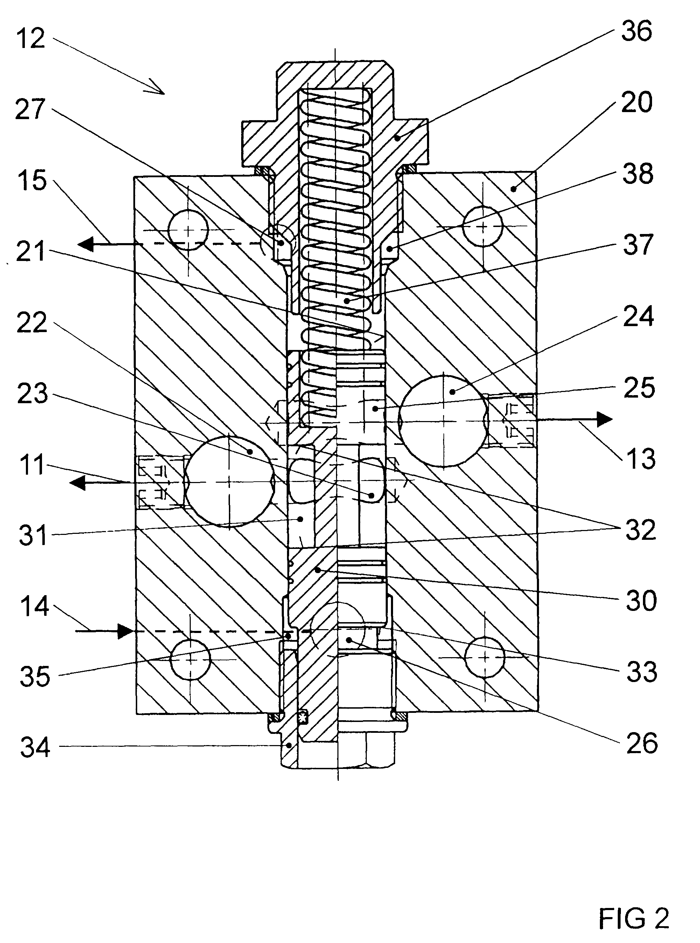

In Fig.2 ist das Druckbegrenzungsventil genau abgebildet. Dessen Ventilgehäuse 20 enthält eine zylindrische Bohrung 21, einen mit der Rücklaufleitung 11 in Verbindung stehenden ersten Kanal 22, der an einer Öffnung 23 in die zylindrische Bohrung 21 mündet, einen mit dem Abfluß 13 in Verbindung stehenden zweiten Kanal 24 mit einer ähnlichen Öffnung 25, eine mit der Steuerleitung 14 in Verbindung stehende Steueröffnung 26 sowie eine Belüftungsbohrung 27, die mit der unter Umgebungsdruck stehenden Leitung 15 verbunden ist.

In der zylindrischen Bohrung 21 ist ein Kolbenschieber 30 dicht geführt. Er bildet zwischen zwei Flächen 32 gleicher Größe einen Ringraum 31. Dieser steht in der gezeichneten geschlossenen Stellung des Ventiles nur mit der Öffnung 23 des ersten Kanales 22 in Verbindung, die Öffnung 25 des zweiten Kanales 24 ist abgedeckt. In geöffneter Stellung gibt der Kolbenschieber 30 auch die Öffnung 25 des zweiten Kanales 24 frei, sodaß Rücklaufleitung 11 und Abfluß 13 miteinander in Verbindung stehen.

Ein Ende des Kolbenschiebers 30 hat eine Schulter 33, die gemeinsam mit dem Ventilgehäuse 20 und einer ersten Dichtungsbüchse 34 einen Steuerraum 35 bildet, der über die Steueröffnung 26 immer mit der Steuerleitung 14 in Verbindung steht. Das andere Ende des Kolbenschiebers 30 stützt sich über eine Druckfeder 37 auf einer zweiten Dichtungsbüchse 36 ab, die ebenso wie die erste Dichtungsbüchse 34 in das Ventilgehäuse 20 eingeschraubt ist. Zwischen der zweiten Dichtungsbüchse und dem Ventilgehäuse 20 ist ein Entlüftungsraum 38 gebildet, der über die Belüftungsbohrung 27 und die Leitung 15 mit der Atmosphäre verbunden ist.

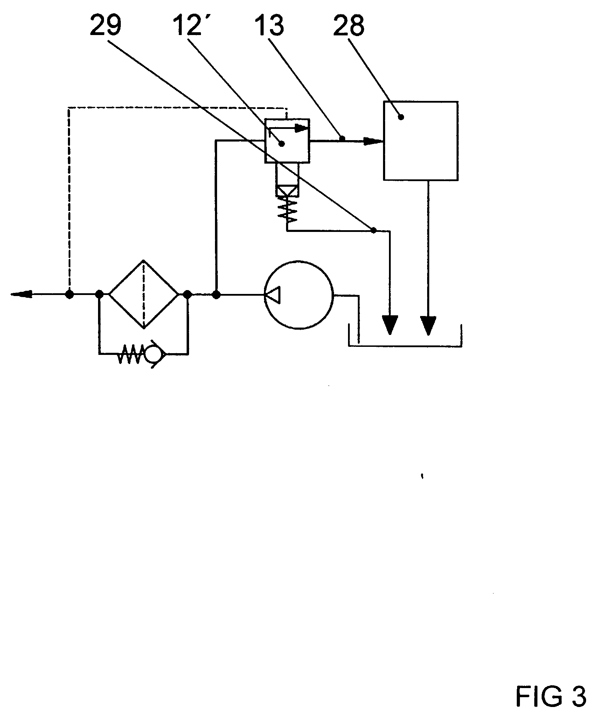

Das abgewandelte Druckölsystem gemäß Fig.3 unterscheidet sich von dem der Fig.1 nur dadurch, daß ein anderes Druckbegrenzungsventil 12' vorgesehen ist, daß der Abfluß 13 in ein weiteres Druckölsystem 28 tieferen Druckniveaus führt, und daß ein weiterer Rückfluß 29 aus dem Ventil 12 heraus vorgesehen ist. Durch die neuerungsgemäße Anordnung hat der Druck im weiteren Druckölsystem 28 keine Rückwirkung auf den Systemdruck, was ein wesentlicher Beitrag zur Steigerung der Betriebssicherheit ist.

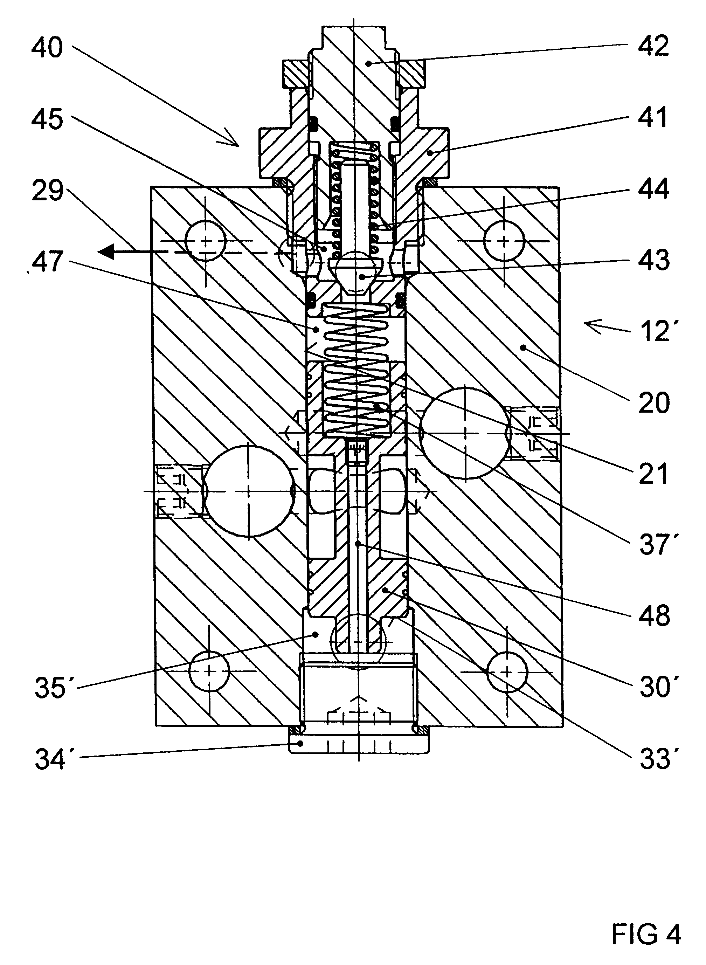

Fig.4 zeigt das Druckbegrenzungsventil 12' im Schnitt. Gleiche Teile tragen die selben Bezugszeichen wie in Fig.2. Der wesentliche Unterschied gegenüber letzterer besteht darin, daß zusätzlich ein Vorsteuerventil 40 eingebaut ist. Dieses besteht aus einem Vorsteuerventilgehäuse 41 (anstelle der zweiten Dichtungsbüchse 36 der Fig.2), einem darin befestigten Einsatz 42, in dem ein Ventilkegel 43 geführt und von einer Vorsteuerfeder 44 von innen an die entsprechende Öffnung des Vorsteuerventilgehäuses 41 gedrückt wird. Die auf den Kolbenschieber 30' wirkende Druckfeder 37' stützt sich an der inneren Stirnfläche des Vorsteuerventilgehäuses 41 ab.

Der Kolbenschieber 30' besitzt einen achsialen Drosselkanal 48, der den zwischen dem Kolbenschieber 30', dem Vorsteuerventilgehäuse 41 und zylindrischen Bohrung 21 des Ventilgehäuses 20 gebildeten Vorsteuerdruckraum 47 mit dem Steuerraum 35' verbindet. Der Stopfen 34' dient auch als Anschlag für den Kolbenschieber 30'.

Das zuletzt beschriebene Druckbegrenzungsventil 12' arbeitet wie folgt: Solange der Druck in der Steuerleitung 14 kleiner oder gleich dem vorgegebenen Versorgungsdruck ist, befindet sich der Kolbenschieber 30' in der in Fig.4 gezeigten Stellung. Steigt der Druck in der Steuerleitung 14 darüber, so steigt auch der Druck im Steuerraum 35'. Wenn die auf die Schulter 33' wirkende Kraft größer als die Kraft der Feder 37' ist, bewegt sich der Kolbenschieber 30' in Fig.4 aufwärts, und Drucköl gelangt durch den Drosselkanal 48 in den Vorsteuerdruckraum 47. Wenn der Druck in diesem hoch genug ist, um den Ventilkegel 43 abzuheben, sinkt der Vorsteuerdruck wieder und der Kolben 30' kann sich weiter im Öffnungssinn bewegen. Dabei fließt ein geringer Steuerölstrom aus dem Innenraum 45 in den weiteren Rücklauf 29 (Fig.3). Sinkt der Druck im Steuerraum 35' und im Vorsteuerdruckraum 47, so schließt das Vorsteuerventil wieder und die Druckfeder 37' bringt den Kolben 30' wieder in die geschlossene Ausgangsposition.

## Patentansprüche

1. Druckölsystem, dessen Versorgungsteil eine Ölpumpe, einen an deren Druckseite anschließenden Ölfilter und ein Druckbegrenzungsventil enthält, dadurch **gekennzeichnet,** daß das Druckbegrenzungsventil (12,12') in einer zwischen der Ölpumpe (6) und dem Ölfilter (8) abzweigenden Rücklaufleitung (11,13) angeordnet ist und über eine Steuerleitung (14) mit einer Stelle stromabwärts des Ölfilters (8) verbunden ist.

2. Druckölsystem nach Anspruch 1, dadurch **gekennzeichnet,** daß das Druckbegrenzungsventil (12,12') ein Schieberventil mit zwei in Schieberlängsrichtung versetzten in den Rücklauf (11,13) eingebundenen Kanälen (22,24), dessen Kolbenschieber (30,30') einen Ringraum (31) aufweist, der auf beiden Seiten durch gleich große Flächen (32) begrenzt ist, und auf dessen Kolbenschieber (30,30') in einer Richtung der Druck in der Steuerleitung (14) und in der entgegengesetzten Richtung die Kraft einer Druckfeder (37,37') wirkt, sodaß der Kolbenschieber die Strömung durch den Ringraum (31) reingibt, wenn der Druck in der Steuerleitung (14) einen eingestellten Wert erreicht.

3. Druckölsystem nach Anspruch 2, dadurch **gekennzeichnet**, daß der Druck in der Steuerleitung (14) über einen Drosselkanal (48) zusätzlich in eine Kammer (47) geleitet ist, in der er auch im Sinne der Druckfeder (37') auf den Kolbenschieber (30') wirkt und daß an die Kammer (47) ein Vorsteuerventil (40) angeschlossen ist, das sich öffnet, wenn der Druck in der Kammer (47) einen eingestellten Wert erreicht.

4. Druckölsystem nach Anspruch , dadurch **gekennzeichnet,** daß der Drosselkanal (48) im Inneren des Kolbenschiebers (30') ausgebildet ist und die Kammer (47) die auf den Kolbenschieber (30') wirkende Druckfeder (37') enthält.

5. Kraftfahrzeuggetriebe (1), dessen Schaltaktuatoren (3) dem Druckölsystem nach einem der vorhergehenden Ansprüche angehören.
